# EUROPÄISCHE PATENTANMELDUNG

(11) **EP 2 246 812 A1**
(43) Veröffentlichungstag der Anmeldung: **03.11.2010**
(21) Anmeldenummer: 09005862.9
(22) Anmeldetag: 27.04.2009
(51) Int. Cl.: G06Q 10/00

(54) **Verfahren zum Projektieren und/oder Konfigurieren eines Projektes**

(71) Anmelder: SIEMENS AKTIENGESELLSCHAFT, 80333 München (DE)
(72) Erfinder: Milvich, Michael, 68753 Waghäusel (DE)

(57) **Zusammenfassung**

Die Erfindung betrifft ein Verfahren zum Projektieren und/oder Konfigurieren eines Projektes, welches eine Automatisierungseinrichtung (4) zum Steuern eines technischen Prozesses repräsentiert, wobei zur Projektierung des Projektes mehrere Software-Werkzeuge (SW1, SW2, SW3, SW4) vorgesehen sind, mittels welchen werkzeugspezifische Objekte (Osw11, ...; Osw21, ...; Osw31, ...; Osw41, ...) erstellt und auf einer Anzeigeeinheit mindestens eines Programmiergerätes (12, 13, 14, 15, 16) dargestellt werden. Es werden geeignete Maßnahmen vorgeschlagen, mittels denen ein Anwender eine Beziehung zwischen Objekten unterschiedlicher Software-Werkzeuge einfach herstellen kann.

## Beschreibung

### Beschreibung

Verfahren zum Projektieren und/oder Konfigurieren eines Projektes

Die Erfindung betrifft ein Verfahren zum Projektieren und/oder Konfigurieren eines Projektes, welches eine Automatisierungseinrichtung zum Steuern eines technischen Prozesses repräsentiert, wobei zur Projektierung und/oder Konfigurierung des Projektes mehrere Software-Werkzeuge vorgesehen sind, mittels welchen werkzeugspezifische Objekte erstellt und auf einer Anzeigeeinheit mindestens eines Programmiergerätes dargestellt werden. Darüber hinaus,betrifft die Erfindung eine Anordnung, welche zur Durchführung des Verfahrens geeignet ist.

Ein derartiges Verfahren sowie eine derartige Anordnung ist aus dem Siemens-Katalog "ST PCS 7 - November 2007", SIMATIC PCS 7, Kapitel 4 bekannt. Ein Prozessleitsystem zur Steuerung einer technischen Anlage weist ein mehrere Programmiergeräte aufweisendes Engineeringsystem auf, welches insbesondere zum Projektieren und/oder Konfigurieren von Hard- und/oder Software-Komponenten, zum Projektieren von Kommunikationsnetzwerken oder von kontinuierlichen und sequenziellen Prozessabläufen vorgesehen ist. Ferner ist das Engineeringsystem zum Design von Bedien- und Beobachtungsstrategien sowie zum Erstellen von Rezepten für Chargen- bzw. Batchprozesse geeignet. Die erforderlichen Projektdaten für die Projektierung und/oder Konfigurierung eines Projektes, welches die zu entwerfende Automatisierungseinrichtung repräsentiert, sind z. B. in einem Speicher eines Programmiergerätes oder eines Servers hinterlegt. Die Programmiergeräte, welche in einem Multiuser-Betrieb an der Projektierung und/oder Konfigurierung beteiligt sind, greifen im Rahmen dieser Projektierung gewöhnlich auf diesen gemeinsamen Speicher zu, wobei auf den Programmiergeräten mehrere unterschiedliche Software-Werkzeuge ablauffähig sind, mittels denen software-werkzeugspezifische Objekte - beispielsweise Objekte in Form von Alarmen, Bildern oder Sequential Function Chart (SFC)-Bausteinen - editiert und auf einer Anzeigeeinheit des Programmiergerätes dargestellt werden können. Als Software-Werkzeuge sind beispielsweise "leittechnische Bibliotheken", ein "Import-Export-Assistent", ein "Process Device-Manager" oder ein "Continuous Function Chart (CFC)-" oder ein "Sequential Function Chart (SFC)-Editor" vorgesehen. Eine von einem Anwender herstellbare Beziehung zwischen Objekten unterschiedlicher Software-Werkzeuge ist nicht vorgesehen.

Der vorliegenden Erfindung liegt die Aufgabe zugrunde, ein Verfahren der eingangs genannten Art zu verbessern. Darüber hinaus ist eine Anordnung zur Durchführung eines derartigen Verfahrens zu schaffen.

Im Hinblick auf das Verfahren wird diese Aufgabe durch die im kennzeichnenden Teil des Anspruchs 1 und im Hinblick auf die Anordnung durch die im kennzeichnenden Teil des Anspruchs 3 angegebenen Maßnahmen gelöst.

Vorteilhaft ist, dass ein Anwender eine Beziehung zwischen Objekten unterschiedlicher Software-Werkzeuge einfach herstellen kann. Im Rahmen der Projektierung kann ein Anwender einfach und direkt eine Kennung zu einem Objekt vorgeben, wobei die Kennung in menschenlesbarer Form, z. B. mittels einer Tastatur, eingegeben wird. Ein Anwender bearbeitet Objekte z. B. mittels eines Software-Werkzeugs in Form eines Editors und ordnet z. B. einer Reihe von noch nicht fertig gestellten Objekten eine Kennung (einen "Tag") zu, z. B. eine Kennung "ToDo". In der gleichen Art und Weise bearbeitet der Anwender oder ein weiterer an diesem Projekt beteiligter Anwender mittels dieses Editors Objekte und ordnet ebenfalls noch nicht fertig gestellten Objekten diese Kennung zu. Zu einem späteren Zeitpunkt können sehr einfach durch ein Suchsystem die Objekte über diese Kennung aufgefunden werden, wobei das Suchsystem die Editoren zur Anzeige der Objekte aufruft, mit welchen die editorspezifischen Objekte erstellt wurden. Über die zugeordnete Kennung ist es möglich, die in Beziehung gesetzten oder auch in Wirkverbindung zueinander stehenden Objekte unterschiedlicher Software-Werkzeuge zu erkennen.

Ein Anwender oder mehrere Anwender können zu verschiedenen Zeitpunkten Objekte mit Kennungen versehen, um z. B. Unklarheiten zu hinterlegen, die zu einem späteren Zeitpunkt geprüft werden. Insbesondere im Rahmen einer verteilten Projektierung, was bedeutet, dass ein Projekt in mehrere auf verschiedenen Programmiergeräten zu bearbeitende Teilprojekte unterteilt ist, ist eine bessere Teamarbeit der am Projekt beteiligten Anwender bzw. Projektierer möglich.

Die Kennungen können z. B. dazu vorgesehen werden, um noch nicht vollständig bearbeitete Objekte zu kennzeichnen oder um Kommentare zu hinterlegen, warum ein Objekt auf eine bestimmte Art und Weise bearbeitet wurde. Auch können Kennungen vorgesehen werden, um Objekten Metadaten bzw. Informationen zuzuordnen, beispielsweise um auf besondere Eigenschaften eines in einer Anlage einzusetzenden bzw. eingesetzten Heizkessels hinzuweisen. Darüber hinaus sind die Kennungen geeignet, um Unklarheiten, welche im Rahmen einer Projektierung oder Teilprojektierung aufgetreten sind, zu hinterlegen, welche zu einem späteren Zeitpunkt analysiert werden können. Dies ermöglicht eine bessere Teamarbeit insbesondere im Hinblick auf eine verteilte Projektierung.

Mittels des Suchsystems sind sehr schnell den Kennungen zugeordnete Informationen auffindbar, wobei auch ältere Informationen schnell wieder gefunden und mögliche Parallelen zwischen alten und neueren Informationen leichter in Verbindung gebracht werden können.

Die Erfindung ist insbesondere in einem Prozessleitsystem einsetzbar, in welchem gewöhnlich mehrere tausend Objekte auf Anzeigeeinheiten der Programmiergeräte dargestellt werden. Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
Figur 1 eine Anordnung zum Projektieren und/oder Konfigurieren eines Projektes und
Figur 2 ein Prozessleitsystem.

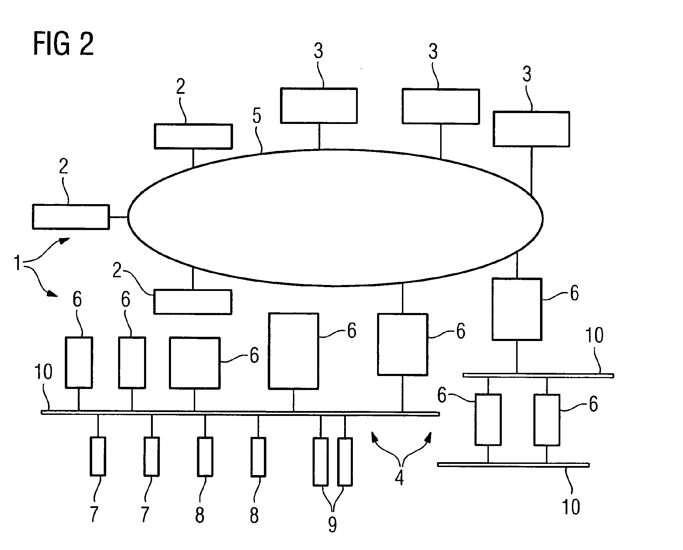

Zunächst wird auf Figur 2 verwiesen, in welcher ein an sich bekanntes Prozessleitsystem 1 dargestellt ist. Das Prozessleitsystem 1 weist ein mehrere Programmiergeräte umfassendes Engineeringsystem 2, ein Bedien- und Beobachtungssystem 3 und eine projektierte und konfigurierte Automatisierungseinrichtung 4 auf, wobei das Engineeringsystem 2 zur Projektierung der Automatisierungseinrichtung 4 vorgesehen ist. Die Automatisierungseinrichtung 4, welche über ein Bussystem 5 und hier nicht dargestellte Busanschaltungen mit dem Engineeringsystem 2 und dem Bedien- und Beobachtungssystem 3 verbunden ist, umfasst unterschiedliche Automatisierungsgeräte 6, ferner Aktoren 7 und Sensoren 8 sowie weitere zur Steuerung einer technischen Anlage erforderliche Automatisierungskomponenten 9. Die Automatisierungsgeräte 6, welche über das Bussystem 5 und/oder weitere geeignete Bussysteme 10 miteinander verbunden sind, können unterschiedlich ausgebildet sein. So sind gewöhnlich Automatisierungsgeräte zur Lösung kleiner, mittlerer und größerer Automatisierungsaufgaben innerhalb der Automatisierungseinrichtung 4 vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. Mit welchen Hard- und Software-Komponenten, d. h. mit welchen Automatisierungsgeräten, Bedien- und Beobachtungsgeräten, Bussystemen, Aktoren und Sensoren, und mit welchen Steuerprogrammen die Automatisierungseinrichtung 4 zu versehen ist, ist abhängig von der Komplexität der zu steuernden technischen Anlage und der Steueraufgabe, wobei die erforderlichen Hard- und Software-Komponenten der Automatisierungseinrichtung 4 durch das Engineeringsystem 2 projektierbar und/oder konfigurierbar sind.

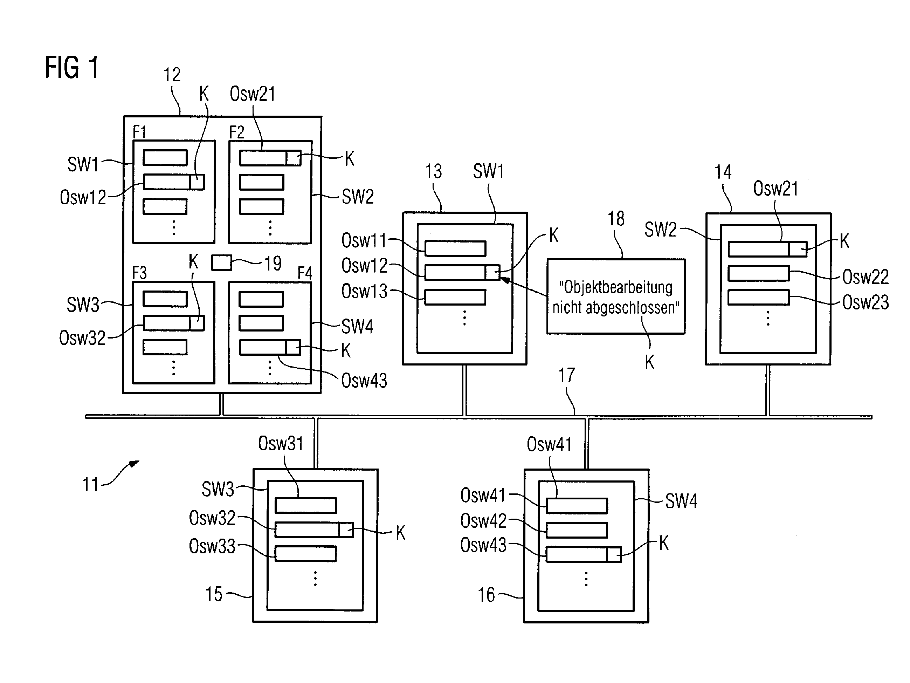

Im Folgenden wird auf Figur 1 verwiesen, in der eine Anordnung in Form eines Engineeringsystems 11 zum Projektieren und/oder Konfigurieren von Hard- und Software-Komponenten einer Automatisierungseinrichtung dargestellt ist. Das Engineeringsystem 11 weist mehrere Programmiergeräte 12 ... 16 auf, auf welchen jeweils mindestens ein Software-Werkzeug ablauffähig ist. Selbstverständlich ist es möglich, dass auf jedem der Programmiergeräte sämtliche Software-Werkzeuge ablauffähig sind, welche zum Projektieren und/oder Konfigurieren eines Projektes oder eines Teils des Projektes erforderlich sind. Im dargestellten Ausführungsbeispiel ist vorgesehen, dass auf dem Programmiergerät 13 ein erstes Software-Werkzeug SW1 gestartet ist, mittels dessen ein Anwender werkzeugspezifische Objekte Osw11, Osw12, Osw13, ... editiert, die auf einer Anzeigeeinheit des Programmiergerätes 13 dargestellt sind. Ferner wird angenommen, dass ein Anwender oder ein weiterer Anwender auf dem Programmiergerät 14 durch ein zweites Software-Werkzeug SW2 werkzeugspezifische Objekte Osw21, Osw22, Osw23, ... erstellt, die auf einer Anzeigeeinheit des Programmiergerätes 14 angezeigt werden. In der beschriebenen Art und Weise sind darüber hinaus auf einer Anzeigeeinheit des Programmiergerätes 15 durch ein drittes Software-Werkzeug SW3 erstellte werkzeugspezifische Objekte Osw31, Osw32, Osw33, ... und auf einer Anzeigeeinheit des Programmiergerätes 16 durch ein viertes Software-Werkzeug SW4 erzeugte werkzeugspezifische Objekte Osw41, Osw42, Osw43, ... dargestellt.

Die Software-Werkzeuge SW1, SW2, SW3, SW4 sind dazu ausgebildet, dass der jeweilige Anwender bzw. der jeweilige Projektierer den software-werkzeugspezifischen Objekten unterschiedliche Kennungen zuweisen kann. Im dargestellten Ausführungsbeispiel weist bzw. ordnet ein Projektierer am Programmiergerät 13 dem werkzeugspezifischen Objekt Osw12 eine Kennung K in Form eines menschenlesbaren Begriffs - z. B. den Begriff "Objektbearbeitung nicht abgeschlossen" - zu, damit dieses Objekt Osw12 zu einem späteren Zeitpunkt analysiert werden kann. Um dieses Objekt Osw12 markieren zu können bzw. dieses mit der Kennung K zu versehen, ermöglicht das Software-Werkzeug SW1, dass aufgrund einer Eingabe durch den Projektierer - beispielsweise aufgrund einer Tastatur- oder Mauseingabe - das Objekt Osw12 markiert wird und ferner sich auf der Anzeigeeinheit des Programmiergerätes ein Eingabefeld 18 zur Eingabe der Kennung K in Form des menschenlesbaren Begriffs "Objektbearbeitung nicht abgeschlossen" öffnet. Nachdem die Eingabe beendet ist, ist die Vergabe der Kennung abgeschlossen und der Projektierer kann bei Bedarf weitere Objekte Osw11, Osw13, ... kennzeichnen.

In der beschriebenen Art und Weise können Projektierer mittels der Software-Werkzeuge SW2, SW3, SW4 und entsprechender Eingaben den werkzeugspezifischen Objekten Osw21, ...; Osw31, ...; Osw41, ... Kennungen bzw. Markierungen zuordnen. Im gezeigten Beispiel ist den Objekten Osw21, Osw32 und Osw43 ebenfalls die Kennung K in Form des menschenlesbaren Begriffs "Objektbearbeitung nicht abgeschlossen" zugeordnet.

Damit ein Anwender bzw. Projektierer die mit der Kennung K versehenen werkzeugspezifischen Objekte Osw12, Osw21, Osw32, Osw43 der Software-Werkzeuge SW1, SW2, SW3, SW4 auffinden kann, ist das Programmiergerät 12 mit einem Suchsystem 19 versehen. Nach dessen Aktivierung und Eingabe der Kennung K in Form des menschenlesbaren Begriffs "Objektbearbeitung nicht abgeschlossen" als Suchbegriff werden die dieser Kennung K zugeordneten werkzeugspezifischen Objekte Osw12, Osw21, Osw32, Osw43 auf einer Anzeigeeinheit des Programmiergerätes 12 angezeigt. Dazu wird neben der Darstellung dieser Objekte Osw12, Osw21, Osw32, Osw43 angezeigt, mittels welcher Software-Werkzeuge SW1, SW2, SW3, SW4 diese Objekte bearbeitet wurden. Vorzugsweise sind die Software-Werkzeuge SW1, SW2, SW3, SW4 auch auf dem Programmiergerät 12 selbst hinterlegt und werden auf diesem Programmiergerät 12 durch das Suchsystem 19 gestartet, wobei - wie im Ausführungsbeispiel gezeigt - die Objekte Osw12, Osw23, Osw32, Osw43 innerhalb des jeweiligen Software-Werkzeuges SW1, SW2, SW3, SW4 mit der Kennung K markiert bzw. gekennzeichnet angezeigt werden, wobei ferner der jeweilige Name dieser Software-Werkzeuge SW1, SW2, SW3, SW4 in entsprechenden Feldern F1, F2, F3, F4 angezeigt wird. Die Aktivierung des Suchsystems 19 kann ebenfalls mittels einer entsprechenden Tastatur- oder Mauseingabe erfolgen, aufgrund deren sich auf der Anzeigeeinheit des Programmiergerätes 12 ein Suchfenster zur Eingabe eines Suchbegriffs öffnet. Selbstverständlich ist es möglich, das Suchsystem 19 anstatt auf dem Programmiergerät 12 auf jedem der Programmiergeräte 13, 14, 15, 16 ablaufen zu lassen.

## Patentansprüche

1. Verfahren zum Projektieren und/oder Konfigurieren eines Projektes, welches eine Automatisierungseinrichtung (4) zum Steuern eines technischen Prozesses repräsentiert, wobei zur Projektierung des Projektes mehrere Software-Werkzeuge (SW1, SW2, SW3, SW4) vorgesehen sind, mittels welchen werkzeugspezifische Objekte (Osw11, ...; Osw21, ...; Osw31, ...; Osw41, ...) erstellt und auf einer Anzeigeeinheit mindestens eines Programmiergerätes (12, 13, 14, 15, 16) dargestellt werden, **gekennzeichnet durch** folgende Schritte:
- Zuordnen einer von einem Anwender vorgebbaren Kennung (K) zu mindestens einem der werkzeugspezifischen Objekte (Osw12, Osw21, Osw32, Osw43) mittels einer Eingabeeinheit des mindestens einen Programmiergerätes (12, 13, 14, 15, 16),
- Auffinden des dieser Kennung (K) zugeordneten Objekts (Osw12, Osw21, Osw32, Osw43) mittels eines Suchsystems (19) des mindestens einen Programmiergerätes oder eines weiteren Programmiergerätes (12, 13, 14, 15, 16) nach einer Aktivierung des Suchsystems (19) **durch** den Anwender.

2. Verfahren nach Anspruch 1, **dadurch gekennzeichnet, dass** die Kennung (K) als ein menschenlesbarer Begriff auf einer Anzeigeeinheit dargestellt wird.

3. Anordnung zum Projektieren und/oder Konfigurieren eines Projektes, welches eine Automatisierungseinrichtung (4) zum Steuern eines technischen Prozesses repräsentiert, wobei zur Projektierung mindestens ein Programmiergerät (12, 13, 14, 15, 16) und mehrere Software-Werkzeuge (SW1, SW2, SW3, SW4) vorgesehen sind, mittels welchen werkzeugspezifische Objekte (Osw11, ...; Osw21, ...; Osw31, ...; Osw41, ...) erstellt und auf einer Anzeigeeinheit dargestellt werden, **dadurch gekennzeichnet, dass** ein Anwender mittels einer Eingabeeinheit des mindestens einen Programmiergerätes (12, 13, 14, 15, 16) eine vorgebbare Kennung (K) zu mindestens einem der werkzeugspezifischen Objekte (Osw12, Osw21, Osw32, Osw43) zuordnet, wobei das Programmiergerät (12, 13, 14, 15, 16) oder ein weiteres Programmiergerät (12, 13, 14, 15, 16) ein Suchsystem (19) aufweist, welches zum Auffinden der dieser Kennung (K) zugeordneten Objekte (Osw12, Osw21, Osw32, Osw43) vorgesehen ist.

4. Anordnung nach Anspruch 3, **dadurch gekennzeichnet, dass** die Kennung (K) ein menschenlesbarer Begriff ist.
